# EUROPEAN PATENT APPLICATION

(11) **EP 4 283 054 A1**
(43) Date of publication of application: **29.11.2023**
(21) Application number: 22742313.4
(22) Date of filing: 17.01.2022
(51) Int. Cl.: E03B 7/07, A01G 25/16, G01F 1/88

(54) **DEVICE FOR THE MEASUREMENT OF FLOWRATES AND VOLUMES, AND FOR THE DETECTION OF CONSUMPTION IN FIRE OR WATERING HYDRANTS OR ANY TYPE OF WATER OUTLET**

(30) Priority: 19.01.2021 ES 202100027 U
(71) Applicant: Albaina López de Armentia, Iñigo, 48112 Maruri (ES)
(72) Inventor: Albaina López de Armentia, Iñigo, 48112 Maruri (ES)
(74) Representative: Capitán García, Maria Nuria
(86) International application number: PCT/ES2022/070014
(87) International publication number: WO 2022/157402

(57) **Abstract**

Device for measuring the volume and volumetric flow in hydrants and hose connections, and in a generic way in any outlet or installation in which the space available for the installation of a flowmeter, meter or any currently existing system for the determination of the flow velocity, is not possible or is very expensive.

It consists of replacing the hose outlet fitting by a modified one wherein a system for creating a differential pressure to the fluid path is enabled inside. From the reading of this differential pressure, the flow that circulates through the outlet fitting will be deduced, and along with the time, the volume transferred. It will also serve as a consumption detector at the outlet.

## Description

### TECHNICAL FIELD

The present invention, as expressed in the title of this specification, relates to a device for measuring the volume and volumetric flow in hydrants and hose connections, and in a generic way in any outlet or installation in which the space available for the installation of a flowmeter, meter or any currently existing system for the determination of the flow velocity, is not possible or is very expensive.

The device consists of replacing the hose outlet fitting by a modified one wherein a system for creating a differential pressure to the fluid path is enabled inside. From the reading of this differential pressure, the flow that circulates through the outlet fitting will be deduced, and along with the time, the volume transferred. It will also serve as a consumption detector at the outlet.

### BACKGROUND OF THE INVENTION

Most hydrants and hose connections are used for municipal services; irrigation, cleaning, etc. and for firefighting. They are installations without any type of control in which consumption is usually authorised, although not registered, thus a source of uncertainty for supply network managers.

There are countless devices for measuring volumetric flow and volume, with all kinds of techniques and technologies. The use of differential pressure elements to determine the circulating flow through a closed duct is also standardised, as is the use of the so-called Prandtl tube to obtain the dynamic pressure of a fluid, or the Pitot tube and a static outlet.

They all exist as commercial elements with different models and variants, the main drawback of all of them being their size and generally high cost for the use that this particular application requires.

### EXPLANATION OF THE INVENTION

The invention consists in the use of the physical concept of creating a differential pressure, either with the use of a differential pressure element, or a Pitot or Prandtl tube, adapting it to an outlet fitting, so that the flow can be measured without having to modify the installation, or carry out any type of work that involves a high cost and that therefore makes its installation unfeasible as they are points with low and sporadic consumption. With the creation of the differential pressure in the connection fitting itself, it is only necessary to unscrew the original one and replace it with the modified fitting with the two outlets.

The differential pressure is created by means of a modified tube that faces the current, having the total pressure (Pitot) and a pressure outlet perpendicular to the duct that gives us the static pressure, such that a difference in pressures is created between the two outlets equivalent to the dynamic pressure. The differential pressure can also be created using a constriction (diaphragm or nozzle), such that the pressure differential is the difference in kinetic energies upstream and downstream of the constriction.

In the two above cases, from the difference in pressures, the fluid velocity is obtained, knowing the section, the flow; with the flow and time we obtain the volume of water that has circulated through the outlet.

The difference in pressures generated produces a circulation of water between the two in what we call the secondary circuit. The flow of this latter circuit is proportional to that of the primary circuit. A microflowmeter will measure the flow of the secondary circuit, since once this is known, that of the primary circuit will be known.

It will also be possible to measure the difference in pressures using a differential pressure transducer or any other element used for measuring pressures.

In turn, the device will serve as a consumption detector at the outlet.

### BRIEF DESCRIPTION OF THE DRAWINGS

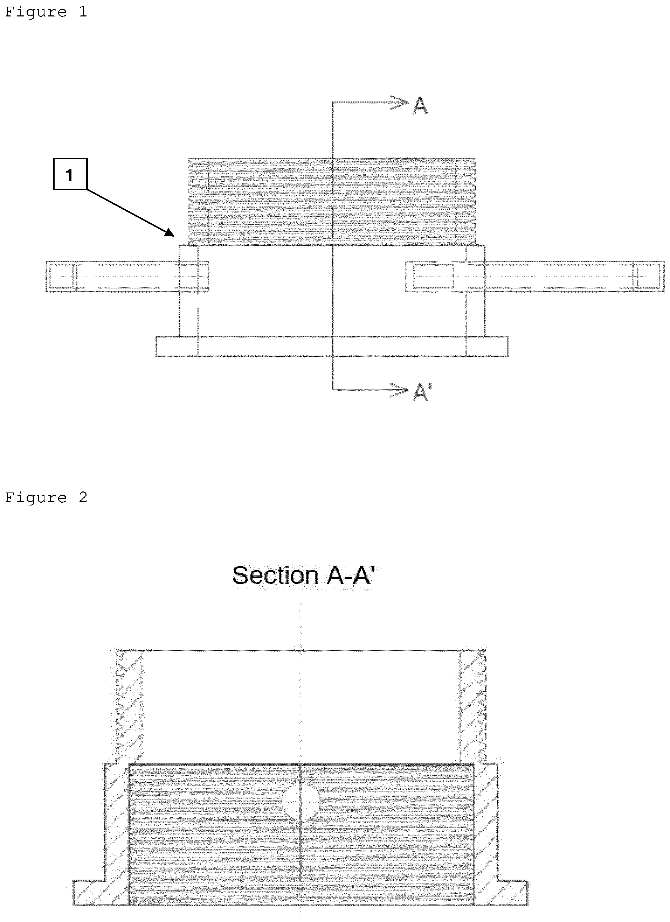

Figure 1.- Elevation view of the modified fitting with the static pressure outlet and the total pressure reading tube.
Figure 2.- Section A-A' showing the modified tube that captures the total pressure.

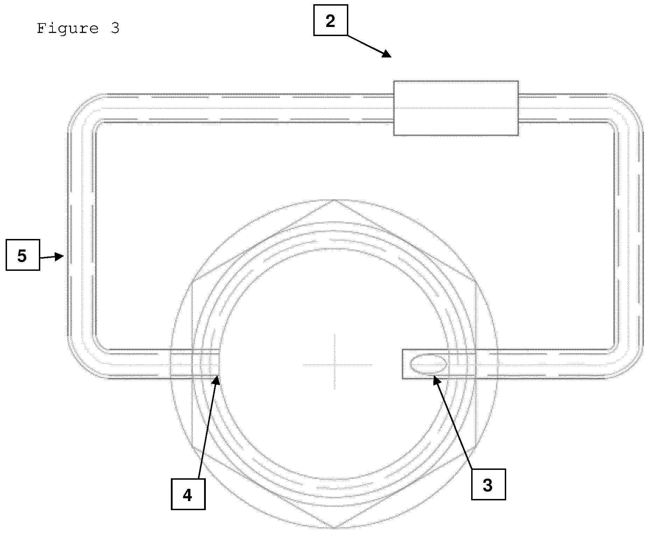

Figure 3. Shows the plan view of the device, with the modified fitting, the static pressure outlet, total pressure outlet, connection tube and flowmeter.

### PREFERRED EMBODIMENT OF THE INVENTION

In view of the aforementioned figures, it can be seen how the device is made up of a fitting assembly, made up in turn of a Barcelona-type fitting or the type that is installed in the hydrant or hose connection in which the device is to be installed, and a male-female Marsella-type extension fitting (1), both joined and perforated in their central part to make the outlets (3) and (4). The assembly can also be made in a single piece.

As a first option, a hollow tube (5), perforated (3) on one of its sides and the end, which is inserted into the fitting, being plugged, is inserted into one of the outlets.

As a second option, a differential pressure element such as a diaphragm or a nozzle is inserted into the fitting, and two pressure outlets are made, one upstream and the other downstream of the differential pressure element inserted.

In both cases, the necessary accessories are connected to communicate the outlets with tubes (5) that allow the circulation of the fluid, in the case of using a microflowmeter (2), and for the reading of the differential pressure in the case of using a pressure transducer or any element for reading it.

Both the elements for capturing the difference in pressures, as well as those for transmitting the data obtained, will be housed in sealed containers separated from the fitting and that can be housed in any available place in the manhole, this is to solve the problem of lack of space next to the outlet fitting.

## Claims

1. Fitting (1) for flow and volume measurement and consumption detection in hydrants, hose connections or any type of outlet, **characterised by** using a tube (5) installed in the fitting itself for reading the total pressure (3), having another outlet (4) for static pressure and using a flowmeter (2) for measuring the circulation of fluid that produces said difference in pressures, to obtain therefrom the flow and/or volume of fluid that circulates through the fitting itself and which in turn serves as a consumption detection system. The measuring element will be connected by tubes (5).

2. Fitting (1) according to claim 1 wherein a differential pressure element -diaphragm, nozzle, etc.- is alternatively used to generate the difference in pressures instead of the tube installed in the fitting itself for reading the total pressure (3).

3. Fitting (1) according to claim 1 wherein a pressure gauge is alternatively used, to determine the flow and volume transferred, based on the difference in pressures, instead of the flowmeter (2).

## Amended claims

### Amended claims under Art. 19.1 PCT

1. Device for flow and volume measurement and consumption detection in hydrants, hose connections or any type of pipeline, made up of a fitting (1) having coupled to it a tube (3) which is plugged at the end and is inside the fitting (1) and has a hole (3), next to the plugged end, oriented so that the mentioned hole (3) is in the direction of the flow that circulates inside of the fitting (1). The other end of the tube (3) being connected to the inlet of the flowmeter (2). The fitting (1) has a second tube (5) coupled to it in which one of the ends (4) that is inside the fitting (1) is perpendicular to the current of fluid that circulates inside the fitting (1). The other end of this second tube (5) is connected to the outlet of the flowmeter (2).

2. Device according to claim 1, **characterised in that** the difference in pressures generated between the hole (3) and the end of the second tube (5) that is inside the fitting (1) is the dynamic pressure of the fluid inside the fitting (1), which is proportional to the square root of the velocity of the fluid, which multiplied by the section perpendicular to the current of fluid inside the fitting (1), gives us the primary flow that circulates inside the fitting (1) and therefore through the pipe to which the fitting (1) has been connected.
The flow circulation generated between the hole (3) (total pressure) and the end of the second tube (5) that is inside the fitting (1) (static pressure) and which is measured by the flowmeter (2), therefore depends both on the dynamic pressure and on the load loss of the circuit formed by the tubes (3) and (5) and the flowmeter (2).
The primary circulating flow through the pipe to which the fitting (1) is coupled, is therefore obtained from the reading of the secondary flow measured by the flowmeter (2) .

Statement under Art. 19.1 PCT
1. Claim 1 amended, claims 2 and 3 deleted, the new claim 2 is the result of dividing the original claim 1.
i. Grounds of the amendment: The original claim 1 has been divided into the only two resulting claims so that there are no product and process characteristics in the same claim, so that in the new claim 1 only the technical characteristics of the flow measurement device are described in much more detail and more clearly. See figures 1, 2 and 3 as filed.
ii. Grounds of the amendment: Claim 2 is new, originating from the division of original claim 1 so that there are no product and process characteristics in the same claim. In this claim, and from the description of the method included in original claim 1, the method for measuring flows with said device is established, also in a more detailed and clearer manner. The wording of the claims has also been corrected so that the preamble of the claims begins the same as the title.

 The only effect of the amendments made is that by deleting claims 2 and 3, some words of the description can be deleted, in particular all those that refer to differential pressure element, narrowing, diaphragm, nozzle, differential pressure transducer or element used for measuring pressure.
 The new wording and more detailed description of the amended and added claims have no effect on either the description or the drawings.
 The claims have been amended to correct formal aspects indicated in the written opinion of the international searching authority, such as "*the claims mix technical characteristics of the device for flow measurement and of the method for measuring flows with said device, it not being permitted that the same claim may contain product and process characteristics",* and that *"the preamble of the claims does not begin in the same way as the title of the invention, since the title begins with "device" and the claims with "fitting". The title must be consistent with the claims and both start in the same way".*
 In addition, the other fundamental aspect for the amendment of the wording and expansion of the detail of the description of the claims, both in the technical characteristics of the device and in the procedure used to measure the flow, has been the lack of clarity expressed on repeated occasions by the international searching authority.
 This lack of clarity has caused a great disparity between the operation of the devices described in the documents found in the search, and indicated as being of particular relevance, and the operation of the device of the application.
